(19)

Europäisches
Patentamt
European
Patent Office
Office européen
des brevets

(11)     **EP 2 429 190 A1**

(12)     **EUROPEAN PATENT APPLICATION**

(43) Date of publication:
**14.03.2012  Bulletin 2012/11**

(51) Int Cl.:
***H04N 7/24*** (2011.01)

(21) Application number: **10176432.2**

(22) Date of filing: **13.09.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **NTT DoCoMo, Inc.
Tokyo (JP)**

(72) Inventors:
• **Thakolsri, Srisakul
80689, Munich (DE)**

• **Kellerer, Wolfgang, Dr.
82256, Fuerstenfeldbruck (DE)**

(74) Representative: **Schöniger, Franz-Josef et al
Betten & Resch,
Patentanwälte,
Theatinerstrasse 8
80333 München (DE)**

Remarks:
Amended claims in accordance with Rule 137(2)
EPC.

(54)     **Method and apparatus for transferring a video stream**

(57)     A method for transferring a video stream having a first resolution from a first user equipment to a second user equipment having a larger screen and being capable of offering a plurality of second resolutions which are higher than said first resolution, wherein one or more third user equipments are also receiving video streams through the same network entity which has a limited bandwidth capacity, said method comprising:

Performing an optimization operation to determine the second resolution to be selected among said plurality of second resolutions at said target user equipment for the video stream,

wherein said optimization operation comprises:

using utility functions as an input to said optimizing operation, said utility functions having been determined in advance and respectively indicating for each video stream the quality perceived by a user depending on the resolution of the video stream and the allocated data rate, wherein

said optimizing operation calculates a combined quality measure based on the utility functions for said video streams, said combined quality measure being calculated such as to find among the plurality of possible resolutions and data rates which could be assigned to said second user equipment, and among the plurality of possible data rates (which could be assigned to the video streams received by said third user equipments after the transfer of said video stream, the resolution and data rates to be assigned to the second and third user equipments after the transfer for which the combined quality measure reaches its optimum or extremum; and

selecting the second resolution and the data rates for the streams received by said second and third user equipments after said transfer of said video stream in accordance with the result of the optimization procedure such that the combined quality measure reaches its extremum.

Fig. 1

## Description

## FIELD OF INVENTION

The present invention relates to a method and an apparatus for transferring a video stream.

## BACKGROUND OF THE INVENTION

When providing an Inter-UE Transfer (IUT) service there arises the problem how to perform a QoE-based resource allocation optimization and the QoE-based decision. With the IUT service defined in 3GPP, a user will be able to move a media across multiple devices. This includes a media transfer, a media retrieval, adding a media, deleting a media and media replication. A complete lists of all possible IUT operations can be found in TS 22.228 in subclause 7.13 (see 3GPP: TS 22.228: Service requirements for Internee Protocol (IP) multimedia core network subsystem (Stage 1) Release 10," December 2009). The proposed algorithm can be applied in any networks, in which an operator would like to provide an IUT service. More generally, the scenario to which the invention to be described later applies is not limited to IUT session transfer, but to all scenarios, where a movement of a session or parts of it between terminals is involved. This will be explained now in somewhat more detail.

As mobile devices improve and include more enhanced capabilities for IP-based multimedia communications, they will remain limited in terms of bandwidth, display size and computational power. Stationary IP multimedia endpoints, including a TV set equipped with a USIM card, hardware IP phones, videoconferencing units, embedded devices and software phones allow more convenience of use, but are not mobile. Moving active multimedia sessions between these devices allows mobile and stationary devices to be used concurrently or interchangeably in mid-session, combining their advantages into a single "virtual device."

There are several ways to provide such a service, In order to make the technology being widely deployed, developing the standard protocol seems to be the easiest and most promising way. The first standardized technology was done in IETF (see R. Shacham, H. Schulzrinne, S. Thakolsri, and W. Kellerer, "Session Initiation Protocol (SIP) Session Mobility," RFC 5631, October 2009), in which it uses the Session Initiation Protocol (SIP) to provide the session mobility. In 3GPP, the session mobility concept has been adopted and standardized as so called Inter-UE Transfer (IUT) (see 3GPP: TS 23.237: IP Multimedia Subsystem (IMS) service continuity (Stage 2) Release 10," December 2009). Due to a centralized network architecture in 3GPP (see "3GPP: TS 23,228: IP Multimedia Subsystem (IMS) (Stage 2) Release 10," December 2009), the protocol solution for IUT is still a SIP-based approach, but it is different than the IETF-based approach, which suits better to the end-to-end architecture. Also, IUT is not just about media transfer and media retrieval, but it also includes other multimedia features.

Providing an IUT service in the fixed network environment is easier than in the mobile network, because there is usually enough network resources for any high demanding applications. In mobile network environment, it is more complicated, as the network resources are limited and it is expensive to provide a high data rate. Furthermore, the available bandwidth is also dependent heavily on the wireless channel quality, which is changing dynamically.

From an operator's view, providing a seamless and ubiquitous service like an IUT service needs a better network's policy planning rather than just using a standard call initiation procedure with the precondition of network resource reservation as defined in subclause 5.1.3 of "3GPP: TS 24.229: IP multimedia call control protocol based on Session Initiation Protocol (SIP) and Session Description Protocol (SDP) (Stage 3) Release 9," December 2009. For instance, prior to an IUT operation, a user may watch a video on his mobile device with a low resolution. When the core network receives a request to transfer the video to a stationary TV set, which is equipped with a USIM card and supports a much higher video resolution, an entity in the core network reserves a channel bearer to guarantee a high data rate as demanded by the higher video resolution, By setting up a high data rate channel bearer, the overall user-perceived quality experiencing level of other users consuming other applications may be drastically degraded. As a consequence, those users would be dissatisfied and may switch to other operators.

In the non-congested network use case, in which the network has enough network resource to provide a possible highest video resolution for the request IUT service, there is nothing special to handle. The requested IUT service will be proceeded as defined in the standard procedure. However, in the congested network use case, in which there is not enough network resource to provide the requested IUT service, the network operator should use the limited network resource in an efficient way. For instance, the operator should optimize the network resource allocation, so that all users are still satisfied or at least having the least impact to other users affected by providing an IUT service to the user.

How to optimize the network resource allocation in order to achieve the maximum system efficiency defined by the overall user perceived quality for multi-users multi-applications is described in S. Khan, S. Duhovnikov, E. Steinbach, and W. Kellerer, "MOS-based multiuser multiapplication cross-layer optimization for mobile multimedia communication," Advances in Multimedia, 2007, article ID 94918. How to achieve the same level of user perceived quality for all users regardless of application types is disclosed in S. Thakolsri, S. Khan, E. Steinbach, and W, Kellerer, "QoE-Driven Cross-Layer Optimization for High Speed Downlink Packet Access," Journal of Communications, Special issue on Multimedia Communications, Networking and Applications, vol 4, no 9, pp. 669-680, Oct. 2009, S. Thakolsri, S. Khan, E. Steinbach, and W. Kellerer, "JCM, 2009.

The prior art, however, does not deal with the problem of how to deal with a resolution change in case of an IUT service in case of limited resources. Actually, resolution is not at all an input parameter to prior art optimization procedures, particularly for optimization procedures related to an IUT service.

It is therefore an object of the present invention to provide a method and an apparatus for performing an IUT service which takes into account possible deterioration of user perceived quality due to limited network resources and which performs a QoE optimization under these circumstances.

## SUMMARY OF THE INVENTION

According to one embodiment there is provided a method for transferring a video stream having a first resolution from a first user equipment to a second user equipment having a larger screen and being capable of offering a plurality of second resolutions which are higher than said first resolution, wherein one or more third user equipments are also receiving possibly different video streams through the same network entity which has a limited bandwidth capacity, said method comprising:

Performing an optimization operation to determine the second resolution to be selected among said plurality of second resolutions at said target user equipment for the video stream to be transferred, wherein said optimization operation comprises:

using utility functions as an input to said optimizing operation, said utility functions having been determined in advance and respectively indicating for each video stream the quality perceived by a user depending on the resolution of the video stream and the allocated data rate, wherein said optimizing operation calculates a combined quality measure based on the utility functions for said video streams, said combined quality measure being calculated such as to find among the plurality of possible resolutions and data rates which could be assigned to said second user equipment, and among the plurality of possible data rates which could be assigned to the video streams received by said third user equipments after the transfer of said video stream, the resolution and data rates to be assigned to the second and third user equipments after the transfer for which the combined quality measure reaches its optimum or extremum; and selecting the second resolution and the data rates for the streams received by said second and third user equipments after said transfer of said video stream in accordance with the result of the optimization procedure such that the combined quality measure reaches its extremum.

By providing utility functions which indicate the dependency of the user perceived quality not only of the data rate but also of the resolution and by further performing an optimization procedure based on these utility functions which searches for an optimum combined quality measure based on all possible allocations of data rates and resolutions it becomes possible to obtain an overall optimum resource allocation which takes into account not only an adaptation of the data rate but also of the resolution when performing an IUT operation. This enables the IUT operation to be performed even under the situation of limited bandwidth by choosing an optimum overall resource allocation, which takes into account data rates and possible resolutions as well as their combined impact on overall quality,

According to one embodiment there is provided one utility function for each application or video stream, said utility function indicating for its corresponding application or video stream how the user perceived quality depends on the resolution and the data rate and/or the codec being used; wherein said combined quality measure is calculated based on the individual quality measures of the first, second and third user equipments and their corresponding video streams as indicated by the utility functions of the video streams; wherein said optimization comprises to look for a resource allocation which involves the allocation of one of said plurality of second resolutions to said second user equipment and respective data rates to each of said second and third user equipments to be used at said second and third user equipments after the transfer of said video stream.

The provision of one utility function for each application or video stream which indicates the quality dependent on the resolution and the data rate and/or the codec allows the optimization to be performed in a manner which takes into account different resolutions. The looking for a resource allocation, which yields an optimized combined quality measure, allows an IUT service even in scenarios of limited bandwidth. The combined quality measure being derived on the quality measures of the individual devices/video streams takes into account all parties involved when performing the optimization procedure.

According to one embodiment said optimum or extremum combined quality measure comprises one or more of the following:

The maximization of the average quality for said second and third user equipments;

the maximization of the total sum of all quality levels of the second and third user equipments;

the maximization of the average overall quality for said second and third user equipments while ensuring a minimum quality level for said transferred video stream:

the minimization of the quality differences between all the second and third user equipments after the transfer.

These are suitable examples for implementing a combined quality measure to be optimized to thereby define an optimization function or objective function for the optimization operation.

According to one embodiment in addition to said plurality of resolutions offered at said second user equipment there are also a plurality of codecs at said second user equipment and/or at said third user equipment, and

said utility function for said stream to be transferred to said second user equipment indicates the user perceived quality based on the selected resolution and based on the selected codec, and/or said utility functions for said streams received by said third user equipments indicate the user perceived quality based on the selected codec;

wherein said optimization optimizes said combined quality measure based on said utility functions, said available second resolutions, and said available codecs in addition or alternatively to said data rates, to determine the second resolution and the codec for which the combined quality measure reaches an optimum.

This enables to take into account the various available codecs, either alternatively to the various available data rates or in addition to them. The optimization may be performed based on finding the optimum resolution and the optimum data rate, it may be performed based on finding the optimum resolution and the optimum codec, and it may be performed by finding the optimum combination of all three of them.

According to one embodiment when calculating said combined quality measure, different priorities are assigned to correspondingly different resolutions by applying a weighting function to the video utility function which indicates the user perceived quality level at said second user equipment such that for a higher resolution the corresponding user perceived quality level has assigned a higher weight.

This makes it possible to ensure that a higher resolution is taken into account with a higher weight when performing the optimization.

According to one embodiment said weighting function comprises a weighting factor which is larger for larger resolutions and which is applied to the user perceived quality as derived from the utility function for the video stream to be transferred to the second user equipment.

This enables specific implementation of a weighting factor.

According to one embodiment said weighting function comprises a weighting factor being applied to the user perceived quality level as indicated by said utility function, and/or

wherein the weighting factor raises steeper at smaller resolutions and raises less steep at larger resolutions.

This enables specific implementation of a weighting factor.

According to one embodiment said weighting factor is based on one or more of the following: the user perceived quality gain which is achieved when changing from a lower resolution to a higher resolution;

a cost function which indicates a cost parameter indicating costs in network resources which are necessary for keeping the user perceived quality level the same when changing from a first resolution to a second resolution.

In this manner a weighting parameter may be derived.

According to one embodiment said user perceived quality gain is experimentally determined by asking a set of users about their perceived quality gain for a certain change in resolution to thereby obtain a function which indicates the gain in quality gain when changing the resolution from an initial resolution to a higher resolution, and/or

said cost function is defined by the network operator to define the cost parameter as a function of the additional bandwidth which is necessary to change an initial resolution to a second higher resolution.

This is a specific way of determining the quality gain and the cost function.

According to one embodiment said combined parameter is, for a certain second resolution and its required additional bandwidth, obtained as a combination of the user obtained quality gain and the cost function for said quality gain and said second resolution.

This is a specific way of obtaining said weighting parameter.

According to one embodiment there is provided an apparatus for transferring a video stream having a first resolution from a first user equipment to a second user equipment having a larger screen and being capable of offering a plurality of second resolutions which are higher than said first resolution, wherein one or more third user equipments are also receiving possibly different video streams through the same network entity which has a limited bandwidth capacity, said apparatus comprising:

A module for performing an optimization operation to determine the second resolution to be selected among said plurality of second resolutions at said target user equipment for the video stream to be transferred, wherein said optimization operation comprises:

using utility functions as an input to said optimizing operation, said utility functions having been determined in advance and respectively indicating for each video stream the quality perceived by a user depending on the resolution of the video stream and the allocated data rate, wherein

said optimizing operation calculates a combined quality measure based on the utility functions for said video streams, said combined quality measure being calculated such as to find among the plurality of possible resolutions and data rates which could be assigned to said second user equipment, and among the plurality of possible data rates which could be assigned to the video streams received by said third user equipments after the transfer of said video stream, the resolution and data rates to be assigned to the second and third user equipments after the transfer for which the combined quality measure reaches its optimum or extremum; and

a module for selecting the second resolution and the data rates for the streams received by said second and third user equipments after said transfer of said video stream in accordance with the result of the optimization procedure such that the combined quality measure reaches its extremum.

This is a way of implementing an apparatus according to an embodiment of the invention.

According to one embodiment there is provided an apparatus further comprises means, modules or features to carry out a method according to one of the embodiments of the invention.

According to one embodiment there is provided computer program comprising computer program code which when being executed on a computer enables said computer to carry out a method according to one of the embodiments of the invention.

## DESCRIPTION OF THE DRAWINGS

Fig. 1 schematically illustrates a scenario in which embodiments of the invention may be applied.
Fig. 2 schematically illustrates a flowchart according to an embodiment of the invention.
Fig. 3 schematically illustrates a sequence diagram according to an embodiment of the invention.
Fig. 4 schematically illustrates a further embodiment of the invention.
Fig. 5 schematically illustrates a further embodiment of the invention.
Fig. 6 schematically illustrates a further embodiment of the invention.

## DETAILED DESCRIPTION

The present invention will now be described by means of exemplary embodiments. However, first of all some terms which will be used in the description are defined.

3GPP - 3rd Generation Partnership Project

UE - User Equipment

IUT - Inter UE Transfer

QoE - Quality of Experience

Based on the optimization problems stated above, a network operator is confronted with the following questions when deploying the IUT service in the network:

1. How to decide whether an IUT request is allowed to be performed?
2. If allowed,

a. is there any impact to the overall user perceived quality (Quality of Experience (QoE)) for the other users served by the base station in the same? And how much impact?
b. should the operator allow a possible highest video resolution to be shown at the target transferred device? Or should the operator select other video resolutions, so that the overall user perceived quality of all users served by the base station would be kept as high as possible?

3. If not allowed, how to inform to the user that the requested IUT service is not going to be proceeded?

So far the prior art did not provide an approach where when there is preformed a decision for an IUT service. This involves a selection of the resolution and the data rate and/or the codec to be used at the target transferred device by considering the overall Quality of Experience (QoE) of all users served by the same base station.

According to one embodiment the proposed method and apparatus uses a QoE-based resource allocation optimization in order to;

- decide whether to allow an IUT service request to be performed, and to
- select an appropriate video resolution and a data rate and/or codec to be used at the target transferred device

with a consideration of the overall (combined) service quality perceived by all users served by the same base station or network entity prior to performing an IUT operation requested.

For that purpose there is evaluated an optimization function or "objective function" which gives an indication of the overall combined quality which is optimized by looking for an input parameter set (which consists of resolution and data rate and/or codec for the different devices) for which the objective function reaches an optimum or extremum. The objective function used for the optimization process can be set differently depending on the network operator policy, for example, it can be set such that it maximizes the total quality of all users, the average overall quality of all users, or such that it intends to achieve the same quality for all users.

By applying the proposed method and apparatus, the network operator can

- Optimize the usage of the limited network resources while providing an IUT service by keeping the overall user satisfaction level of all users as high as possible; and
- Prevent any serious degradation of the overall quality of experience provided to the users due to an execution of an IUT operation requested by a user.

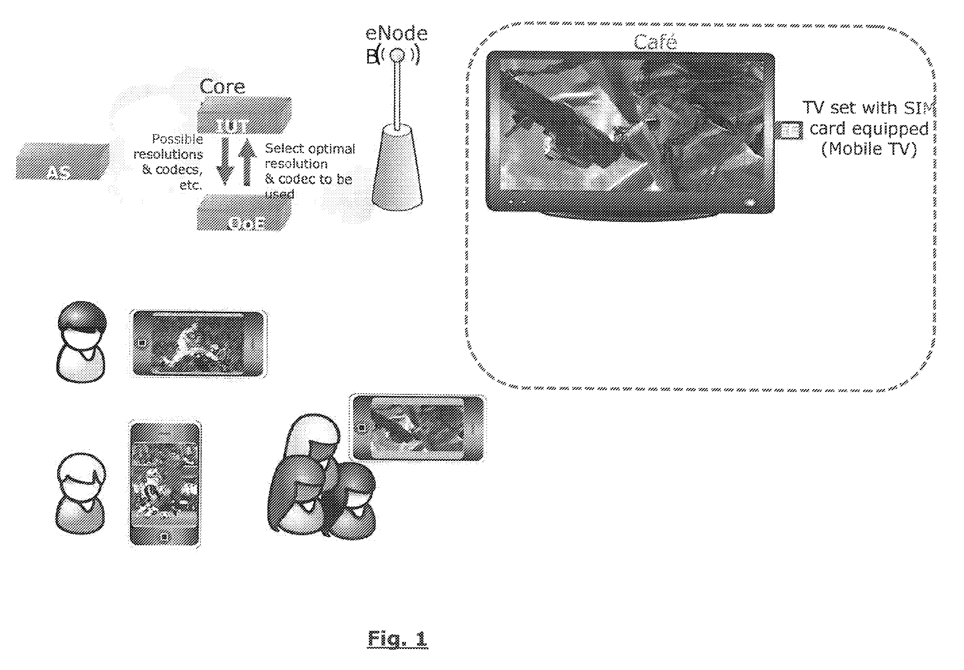

An embodiment of the invention will now be described in somewhat more detail referring to Fig. 1.

The major difference which distinguishes the embodiment from the prior art is the QoE module which is responsible for performing the optimization process. In practice, like in the embodiment shown in Fig. 1, the a QoE module can be integrated in the network, for example, in 3GPP network architecture as depicted in Figure 1. In this example, the user may want to transfer a video from a mobile (e.g. the one in Fig. 1 watched by 3 persons) to a TV set available in a cafe bar and equipped with a USIM card. A network entity which is e.g. a base station or an eNodeB serves several (here 3) UEs, and it has a certain limited total data rate/capacity which it can provide to the UEs which it is serving. If the requested service would lead to exceeding the total network resources (the total available data rate which can be served by eNodeB), then a decision has to be made how to allocate the limited bandwidth or resources such that there can be achieved an optimum compromise between desired quality of experience (QoE) at the UEs which avoids to just deny a certain service such as the IUT service. In particular, the problem arises when the requested service is an IUT service where the new UE to which the stream is transferred has a higher resolution and consequently requires a higher bandwidth.

As can be seen in Fig. 1 there is provided an IUT application server (IUT AS), which is responsible for handling the IUT. Furthermore, there is provided the QoE module, which is responsible for the optimization of the QoE according to the objective function or "optimization function" based on the given input parameters. These input parameters include the possible data rates at the various receiving devices, the different possible resolutions at the target device of the IUT service (in Fig. 1 the large screen), and the corresponding utility functions which indicate for a certain data stream or application and for a certain resolution the dependency of the perceived quality on the data rate. Based on these input parameters the QoE module may then perform the optimization by looking for a resource allocation (a resolution for the second devices and set of allocated data rates allocated to the second and third devices being served) for which the objective function reaches its extremum. This will be explained in somewhat more detail later.

According to one embodiment the utility function indicates the quality not only depending on the resolution and the data rate, but also depending on the chosen codec. In this case also the codec is an input parameter and may be chosen to perform the overall optimization.

The interface between the IUT AS and the QoE module allows information exchange such as all possible resolutions and/or codecs available at the TV set, which is to be used later in the QoE module to find an optimal resolution and codec, which is to be seen at the TV set.

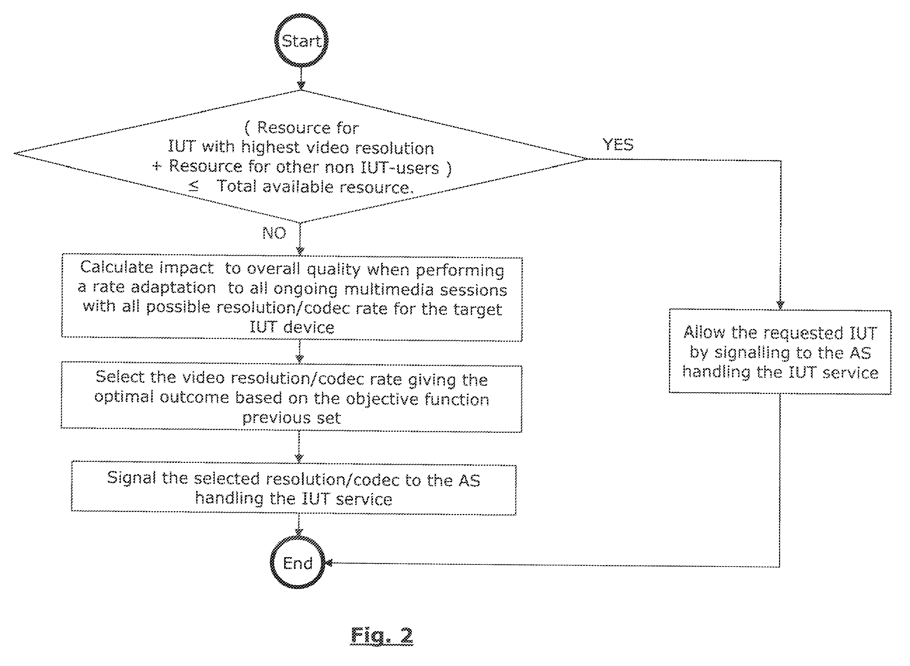

Figure 2 depicts the flow chart of the QoE module, which takes into account the overall quality of experience information in order to make a decision whether to allow an IUT operation and to select an optimal video resolution for an IUT operation requested by the user. First, after the application server (AS) receives an IUT request from the originating device, the application server checks with the QoE module whether there is enough resource to provide the highest video resolution available on the target device or the video resolution requested (if explicitly specified by the user) without reducing any network resources that are currently given to other users. If there is enough network resources, then the AS allows the requested IUT operation as specified in 3GPP: TS 23.237: IP Multimedia Subsystem (IMS) service continuity (Stage 2) Release 10," December 2009. In such a case an optimization procedure is not necessary, the optimization is only necessary if the limited capacity does not allow to serve all devices with the desired data rates and resolutions.

Therefore, if there are not enough network resources, the QoE module calculates an impact of introducing a high demand data stream to the overall quality experienced by all users served by the same base station by performing an optimization procedure, The QoE module will then select the video resolution or video codec, which gives an optimal outcome to the system performance based on the objective function (or optimization function) previously set by the operator. For instance, the operator may set the objective function in a way that the optimal outcome should give the maximum average of all user perceived quality or the maximum sum of user perceived quality. The objective function receives as input the utility functions of the different applications, which indicate the dependency of the overall quality (e.g. indicated by mean opinion score MOPS) depending on the data rate. For the target device this also includes the dependency of the quality on the different resolutions, which may be available at the target device. For example, if the target device supports VGA, XGA, WXGA, and HD resolutions, then for each of these resolutions there may be a utility function that indicates - for the application, which is to be transferred from the first to the second user equipment - how the user perceived quality depends on the data rate.

The objective function then determines - based on the given utility functions inputted to it - the resource allocation for which the objective function reaches an optimum. For example an objective function may consist in the calculation of an overall quality measure such as the "total quality" or "sum of all quality measures" for the various devices, which receive an application within the same cell form the same base station. The objective function or "optimization function" may then look as follows:

$$\arg\max\left(MOS_{UE1.2}(\tilde{x}_{XGA}, \tilde{x}_{WXGA}, \tilde{x}_{HD}) + MOS_{UE2}(\tilde{x}_{VGA}) + MOS_{UE3}(\tilde{x}_{VGA})\right) \quad (1)$$

Here in this example there are initially three UEs, namely UE1.1, UE1.2, UE2, and UE3. The IUT service consists in transferring a video stream from UE1.1 to UE1.2. The optimization then has the goal to find the overall best resource allocation for the devices UE1.2, UE2, and UE3, under the given circumstances, which means a certain limited bandwidth. For that purpose the objective function is designed such that it finds the resource allocation, which maximizes the total sum of the MOS of all three devices.

In the above equation $MOS_{UE1.2}$ is the user perceived quality at the device UE1.2 (the target device) $MOS_{UE2}$ is the MOS at the device UE2, and $MOS_{UE3}$ is the MOPS at the device UE3. UE1.2 offers three possible resolutions, namely XGA, WXGA, and HD. $\tilde{X}_{XGA}$ is the set of all possible resource allocations (data rates) for the XGA resolution, $\tilde{X}_{WXGA}$ is the set of all possible resource allocations for the WXGA resolution, and $\tilde{X}_{HD}$ is the set of possible resource allocations for the HD resolution for UE1.2. UE2 and UE3 have only one possible resolution, and therefore for them the set of possible resource allocation is not resolution dependent and depends only on the data rate.

The utility function - which is predefined, e,g, by having it been measured in advance by test persons for a certain application - indicates for a certain data rate the corresponding quality level (e.g. in terms of MOS). The utility function may be stored in advance in the QoE device, or it may have been delivered together with the application (the video stream).

For the target device UE1.2 there may be three different utility functions one for each resolution (XGA, WXGA, and HD). This is reflected by the three separate sets of possible resource allocations which are the parameters of $MOS_{UE1.2}$ above in (1).

Using these utility functions there can then be performed a calculation to determine the resource allocation, i.e. the data rate and the resolution for each UE, for which the objective function reaches the optimum, in case of the objective function (1) given above this would be the resource allocation where the total sum of the user perceived quality (the MOS) for all three UEs reaches its maximum.

For the actual determination of the value of the objective function for the various possible resource allocation the QoE module may just try all possible different resource allocations, e.g. by using incremental steps of data rates, and calculate the respective values of the objective function, The set of resource allocations, for which the objective function reaches the maximum value, may then be chosen as the resource allocation to the individual UEs after the IUT.

After the optimization, the QoE module signals the selected video resolution and data rate (and/or the video codec, if this is a parameter to the optimization procedure) to the application server AS handling all IUT requests, and the AS proceeds to the normal procedure of handling the IUT request according to the prior art.

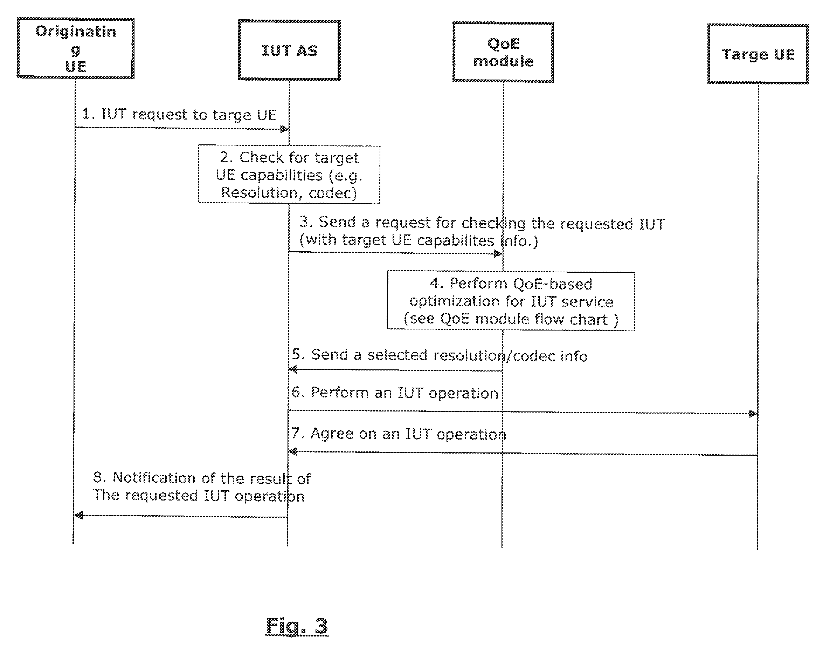

Figure 3 depicts the high level signalling flow of all steps from the step of initiating the IUT request until the step of executing the request IUT operation. First the IUT request to a target UE is forwarded to the IUT application server. Then, after a check of the available target UE capabilities such as resolution or codec there is sent a check request to the QoE module for checking the requested IUT. This includes information about the capabilities of the target UE.

The QoE module then performs an optimization based on the (predefined) objective function and selects a resolution and/or a codec and a data rate for the various devices. The selected resource allocation is then signalled back to the IUT AS which then performs with the target UE an IUT operation. The result is then notified to the originating UE from which the IUT request originally came.

It should be noted that the resource allocation may involve a selection of a plurality of parameters for the various devices involved in the procedure, namely:

the allocation of the data rate and/or the selection of a codec, and
the selection of a resolution for the target device.

The optimization of the resource allocation may therefore not only involve the selection of a data rate for all devices served by the base station and the selection of a resolution for the target device, it may also involve the selection of a (possibly other than before) codec with which the video stream is coded. In such a case the utility function may not only be dependent on the data rate and on the resolution, but it may also be dependent on the codec, which is used. If e.g. there are multiple codecs available, then there may be different utility functions for each codec, each utility function indicating for the given codec and a given resolution the user perceived quality (e.g. in MOS) depending on the data rate. This then means that there are even more input parameters to the objective function; however, it also means that the result, which can be achieved, may be better.

The result of the objective function (the optimization function) is a "resource allocation" which means it is a set of parameters (like data rate and resolution), which are chosen for the various devices such that the quality goal as defined by the "objective function is met. The resource allocation involves a slection among the possible resolutions at the target device, a selection of the data rates for the second and the third user equipments among the possible data rates which may be used, and/or a selection of the codec or codecs used for the video streams among the plurality of available codces. The resulting resource allocation could mean that the devices which are not directly involved in the IUT, i.e. the devices the stream of which is not transferred, will get allocated a smaller data rate in order "free" some bandwidth which can then be allocated to the target device to enable the IUT operation to be executed in such a manner that there is still "acceptable quality" at the target device.

The resource allocation as resulting from the optimization procedure may further involve that at the target device there will not be chosen the "maximum possible resolution" but a smaller one in order to avoid too strong quality deterioration at the devices which are not directly involved at the IUT operation.

In particular the QoE optimization is effective in cases where the overall resources are not sufficient to perform a IUT operation to the target device at its maximum resolution without making any modifications. While the prior art might have just declined the IUT request due to a lack of resources in such a case, the QoE optimization according to the embodiment of the present invention still is capable to find an acceptable solution by trying the variety of possible modifications of the resource allocations (which includes modifications at the resolution of the target device as well as of the data rates and/or codecs of the target device and the other devices not involved in the IUT) in order to find the best possible resource allocation which may still lead to an acceptable quality for all parties/devices involved. The chosen allocation may then involve the usage of a smaller than the maximum resolution at the target device, and it may involve the selection of data rates for the third user equipments (UE2 and UE3) which are smaller than their rates before the IUT service.

If the optimization function cannot find an allocation where the combined quality measure reaches a minimum threshold, then the IUT service as a whole may be denied, If such a threshold is set and at which value is a setting which may be chosen according to the preferences of the network operator.

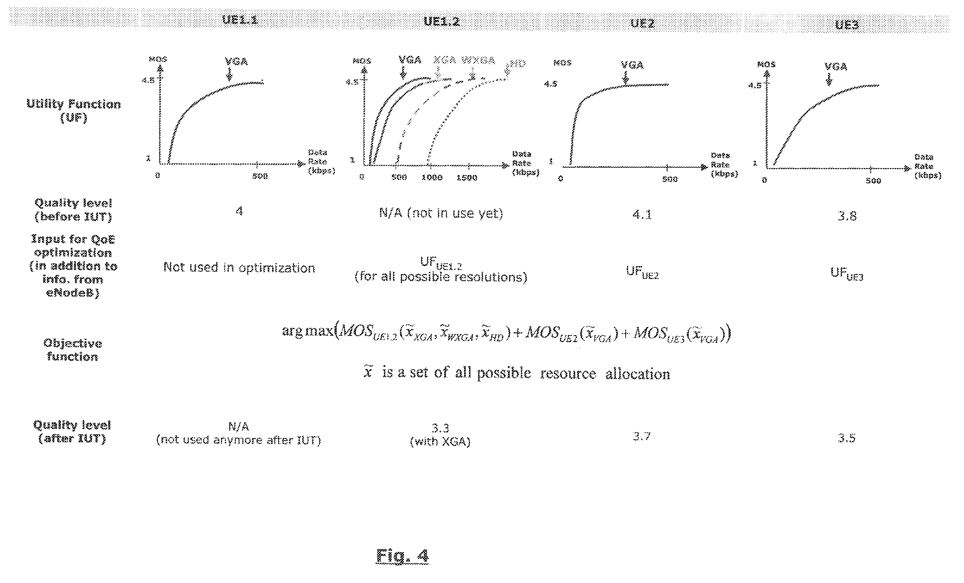

A further embodiment of the invention will now be described in connection with Fig. 4. In the embodiment of Fig. 4 the IUT involves the transfer of a stream from a first device device UE1.1 to a second device UE1.2. In addition to these two third devices UE2 and UE3 are served by the same eNodeB which has a certain limited bandwidth/resource, which can be allocated to the different devices.

The first row the Fig. 4 illustrates the different utility functions for the four devices/applications involved. It can be seen that for UE1.1 there is given only one utility function since this device has only one possible resolution to offer. The utility function indicates for this resolution how the user perceived quality (in terms of MOS) depends on the data rate (in kbps). It should be noted that this utility function (usually) is typical for a certain application or video stream; another applicationvideo stream may have and usually has a different utility function.

If the device/UE offers multiple resolutions, then this can be reflected by multiple utility functions as illustrated for UE1.2 in Fig. 4. There is one utility function for the VGA resolution, one for the XGA resolution, one for WXGA and one for HD. For UE2 and UE3 again there is only one utility function.

It should be noted here that there might also be different utility functions for different codecs. If e.g. there would be two codecs available, then the number of utility functions for each device would double. For the sake of simplicity, however, this situation is not displayed in Fig. 4.

The second row in Fig. 4 illustrates the quality level before the IUT was performed. It can be seen that there is no quality level for the UE1.2 yet, since it is not yet used.

The third row indicates what are the input parameters to the optimization function (objective function), namely the utility functions for the devices UE1.2, UE2, UE3.

These are then used as an input to the objective function, which is illustrated in row 4 of Fig. 4. It can be seen that the optimization function in this embodiment consists in finding the resource allocation for which the total sum of the user perceived qualities of all devices (UE1.2, UE2, and UE3) after the IUT reaches its maximum.

The fifth row then illustrates an exemplary result of the optimization procedure. The optimum resource allocation here is such that the XGA resolution is chosen for the device UE1.2, and the resulting MOPS for UE1.2 is 3.3, while it is 3.7 for UE2 and 3.5 for UE3. This means that the quality level at UE2 and UE3 has been decreased somewhat by the optimization procedure in order to enable the IUT operation. The combination of choosing the third largest resolution (WXGA) for UE1.2 and a data rate which leads to a slightly reduced quality for UE2 and UE3 therefore in this exemplary case yields the optimum resource allocation which gives the best overall quality as defined by the objective function.

It should be noted here that further embodiments might use other objective functions. For example, instead of using the maximum of the total sum of the quality of the various devices, there may be chosen an objective function which maximizes not the total sum but the average quality of all users/devices which are served by the same eNodeB or the same cell. Depending on a different setting of the objective function this may result in a different resource allocation as a result of the optimization.

Another approach for an objective function could be such that it guarantees a certain quality level, which is received by all users/devices; this may be e.g. the minimum quality level, which can be served to all user devices. Based thereon the objective function may optimize the average quality perceived by all devices.

An even further approach could be to design the objective function such that it minimizes the quality differences between the applications perceived by all users/devices, e.g. such that the quality difference between the device with the highest quality (in terms of MOS) and the one with the lowest quality is minimized.

The objective function in all embodiments is defined such that it defines an overall combined quality measure based on a combination of the quality of the multiple devices involved in the IUT operation, and that the optimization function is defined such that it looks for the resource allocation which optimizes the overall quality measure, i.e. to look for a resource allocation where the overall quality measure reaches an optimum or extremum. As an input to the optimization operation a (quality) utility function is used which indicates for a certain application the quality perceived by a user depending on the allocated data rate, the resolution, and possibly also depending on the codec. The optimization operation is then performed s such that it calculates a combined quality measure based on the utility functions for the different applications and for different possible resource allocations to the plurality of applications in such a way that said combined quality measure is optimized by finding among the plurality of possible resource allocations (which includes different data rates and different resolutions) the resource allocation for which said quality measure reaches an extremum, to thereby obtain an overall optimized resource allocation for the network after the IUT operation,

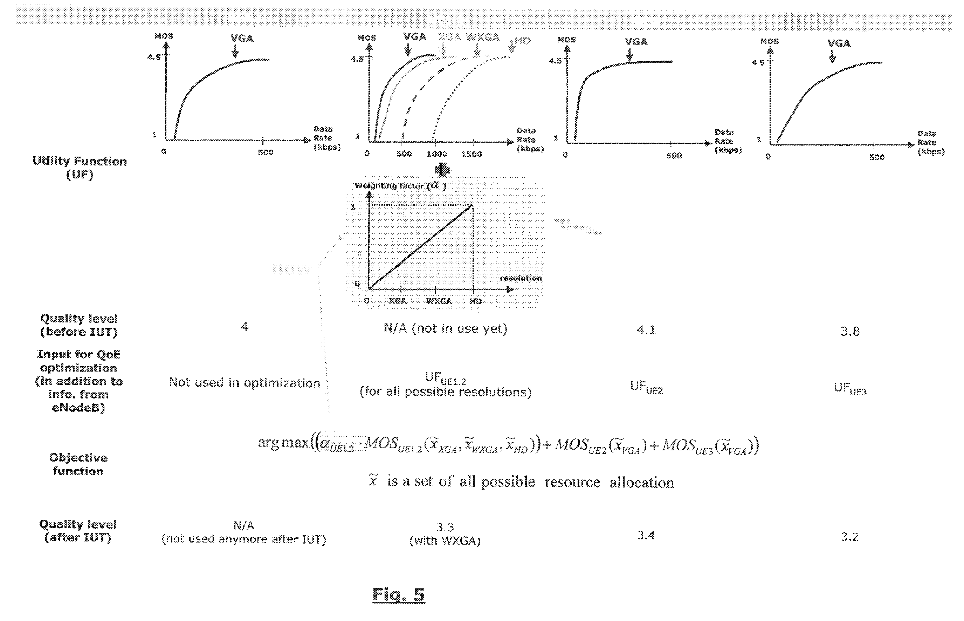

A further embodiment will now be explained in connection with Fig. 5. The embodiment is similar to the one shown in Fig. 4, however, it uses a modified objective function which includes the parameter $\alpha_{UE1.2}$ which is a parameter which assigns different weights to the different resolutions at the target device. An example of how the value of $\alpha_{UE1.2}$ may depend on the resolution is given the second row of Fig. 5. One can see that in this example the value of $\alpha_{UE1.2}$ grows linearly from 0 to 1 as the resolution increases. However, other ways of defining the weighting factor $\alpha_{UE1.2}$ are also possible.

With the weighting factor it becomes possible to assign higher (or lower) weights to the different resolutions or to there respective quality level when they contribute to the overall quality measure. This makes it then possible to prefer higher resolutions over lower ones, and by choosing the weighting factor $\alpha_{UE1.2}$ , its amount and its dependency on the resolution, one may chose the extent to which a certain resolution is preferred over other ones by making it contributing more to the overall quality measure than another one, even if their respective MOS would be the same.

According to one embodiment the weighting factor is chosen such that a higher resolution is assigned a higher weight. A specific example of this embodiment is the one illustrated in Fig. 5.

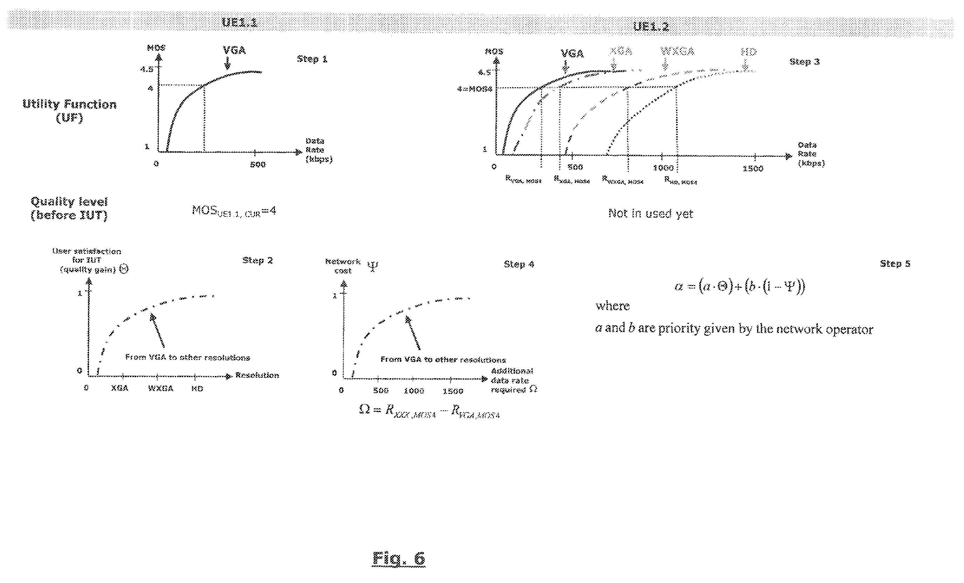

Now there will be illustrated in connection with Fig. 6 an embodiment that illustrates how the weighting factor $\alpha_{UE1.2}$ may be derived. In a first step there is determined the current user perceived quality (MOS) at the device UE1.1 based on the utility function and the corresponding data rate. In a second step there is then obtained the quality gain function, which indicates the quality gain when transferring a stream from a first resolution o a higher resolution, This function may have been predetermined e.g. by user tests. In Fig. 6 there is shown the quality gain for changing the resolution form VGA to different other resolutions such as XGA, WXGA, and HD. In a third step there is then determined for the quality level of device UE1.2 before the IUT (here MOS=4) which additional data rate is required to change to different other resolutions without changing the quality level of MOS=4. This results in different "additional data rates" which are required for the other resolutions. In step 4 then these additional data rates can be used to derive - based on a predetermined network cost function which indicates a network cost parameter which corresponds to a certain additional data rate - network costs for changing to the different resolutions. In step 5 then the parameter $\alpha_{UE1.2}$ is determined based on the user satisfaction gain and the network cost of the different resolutions which have been determined in steps 2 and 4, respectively, by deriving $\alpha_{UE1.2}$ based thereon as shown in step 5. By choosing the parameters a and b shown in Fig. 5 appropriately the network operator can either assign more weight to the change to a higher resolution (higher a) or to the saving of network resources (larger b) by avoiding too large additional network costs.

It should be understood, however, that this is just one possible example of deriving the weighting parameter $\alpha_{UE1.2}$ and other approaches are possible as well.

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a network entity such as a router, a server, a module acting in the network, or a mobile device such as a mobile phone, a smartphone, a PDA, or anything alike.

**Claims**

1. A method for transferring a video stream having a first resolution from a first user equipment to a second user equipment having a larger screen and being capable of offering a plurality of second resolutions which are higher than said first resolution, wherein one or more third user equipments are also receiving possibly different video streams through the same network entity which has a limited bandwidth capacity, said method comprising:

   Performing an optimization operation to determine the second resolution to be selected among said plurality of second resolutions at said target user equipment for the video stream to be transferred,

   wherein said optimization operation comprises:

   Using utility functions as an input to said optimizing operation, said utility functions having been determined in advance and respectively indicating for each video stream the quality perceived by a user depending on the resolution of the video stream and the allocated data rate, wherein
   said optimizing operation calculates a combined quality measure based on the utility functions for said video streams, said combined quality measure being calculated such as to find among the plurality of possible resolutions and data rates which could be assigned to said second user equipment, and among the plurality of possible data rates which could be assigned to the video streams received by said third user equipments after the transfer of said video stream, the resolution and data rates to be assigned to the second and third user equipments after the transfer for which the combined quality measure reaches its optimum or extremum; and
   selecting the second resolution and the data rates for the streams received by said second and third user equipments after said transfer of said video stream in accordance with the result of the optimization procedure such that the combined quality measure reaches its extremum.

2. The method of claim 1, wherein
   there is provided one utility function for each application or video stream, said utility function indicating for its corresponding application or video stream how the user perceived quality depends on the resolution and the data rate and/or the codec being used;
   wherein said combined quality measure is calculated based on the individual quality measures of the first, second and third user equipments and their corresponding video streams as indicated by the utility functions of the video streams;
   wherein said optimization comprises to look for a resource allocation which involves the allocation of one of said plurality of second resolutions to said second user equipment and respective data rates to each of said second and third user equipments to be used at said second and third user equipments after the transfer of said video stream.

3. The method of claim 1 or 2, wherein said optimum or extremum combined quality measure comprises one or more of the following:

The maximization of the average quality for said second and third user equipments;

the maximization of the total sum of all quality levels of the second and third user equipments;

the maximization of the average overall quality for said second and third user equipments while ensuring a minimum quality level for said transferred video stream;

the minimization of the quality differences between all the second and third user equipments after the transfer.

**4.** The method of one of the preceding claims, wherein in addition to said plurality of resolutions offered at said second user equipment there are also a plurality of codecs at said second user equipment and/or at said third user equipment, and

said utility function for said stream to be transferred to said second user equipment indicates the user perceived quality based on the selected resolution and based on the selected codec, and/or said utility functions for said streams received by said third user equipments indicate the user perceived quality based on the selected codec; wherein said optimization optimizes said combined quality measure based on said utility functions, said available second resolutions, and said available codecs in addition or alternatively to said data rates, to determine the second resolution and the codec for which the combined quality measure reaches an optimum.

**5.** The method of one of the preceding claims, wherein

when calculating said combined quality measure, different priorities are assigned to correspondingly different resolutions by applying a weighting function to the video utility function which indicates the user perceived quality level at said second user equipment such that for a higher resolution the corresponding user perceived quality level has assigned a higher weight.

**6.** The method of claim 5, wherein said weighting function comprises a weighting factor which is larger for larger resolutions and which is applied to the user perceived quality as derived from the utility function for the video stream to be transferred to the second user equipment,

**7.** The method of one of claims 5 to 6, wherein said weighting function comprises a weighting factor being applied to the user perceived quality level as indicated by said utility function, and/or

wherein the weighting factor raises steeper at smaller resolutions and raises less steep at larger resolutions

**8.** The method of claim 5 to 7, wherein said weighting factor is based on one or more of the following:

The user perceived quality gain which is achieved when changing from a lower resolution to a higher resolution;

a cost function which indicates a cost parameter indicating costs in network resources which are necessary for keeping the user perceived quality level the same when changing from a first resolution to a second resolution.

**9.** The method of one of claims 5 or 8, wherein

said user perceived quality gain is experimentally determined by asking a set of users about their perceived quality gain for a certain change in resolution to thereby obtain a function which indicates the gain in quality gain when changing the resolution from an initial resolution to a higher resolution, and/or

said cost function is defined by the network operator to define the cost parameter as a function of the additional bandwidth which is necessary to change an initial resolution to a second higher resolution.

**10.** The method of one of claims 5 to 9, wherein

said combined parameter is, for a certain second resolution and its required additional bandwidth, obtained as a combination of the user obtained quality gain and the cost function for said quality gain and said second resolution.

**11.** An apparatus for transferring a video stream having a first resolution from a first user equipment to a second user equipment having a larger screen and being capable of offering a plurality of second resolutions which are higher than said first resolution, wherein one or more third user equipments are also receiving possibly different video streams through the same network entity which has a limited bandwidth capacity, said apparatus comprising:

a module for performing an optimization operation to determine the second resolution to be selected among said plurality of second resolutions at said target user equipment for the video stream to be transferred,

wherein said optimization operation comprises:

using utility functions as an input to said optimizing operation, said utility functions having been determined in advance and respectively indicating for each video stream the quality perceived by a user depending on the resolution of the video stream and the allocated data rate,
wherein
said optimizing operation calculates a combined quality measure based on the utility functions for said video streams, said combined quality measure being calculated such as to find among the plurality of possible resolutions and data rates which could be assigned to said second user equipment, and among the plurality of possible data rates which could be assigned to the video streams received by said third user equipments after the transfer of said video stream, the resolution and data rates to be assigned to the second and third user equipments after the transfer for which the combined quality measure reaches its optimum or extremum; and
a module for selecting the second resolution and the data rates for the streams received by said second and third user equipments after said transfer of said video stream in accordance with the result of the optimization procedure such that the combined quality measure reaches its extremum.

12. The apparatus of claim 11, wherein
there is provided one utility function for each application or video stream, said utility function indicating for its corresponding application or video stream how the user perceived quality depends on the resolution and the data rate and/or the codec being used;
wherein said combined quality measure is calculated based on the individual quality measures of the first, second and third user equipments and their corresponding video streams as indicated by the utility functions of the video streams;
wherein said optimization comprises to look for a resource allocation which involves the allocation of one of said plurality of second resolutions to said second user equipment and respective data rates to each of said second and third user equipments to be used at said second and third user equipments after the transfer of said video stream.

13. The apparatus of claim 11 or 12, wherein said optimum or extremum combined quality measure comprises one or more of the following:

The maximization of the average quality for said second and third user equipments;
the maximization of the total sum of all quality levels of the second and third user equipments;
the maximization of the average overall quality for said second and third user equipments while ensuring a minimum quality level for said transferred video stream;
the minimization of the quality differences between all the second and third user equipments after the transfer.

14. The apparatus of one of claims 11 to 13, wherein in addition to said plurality of resolutions offered at said second user equipment there are also a plurality of codecs at said second user equipment and/or at said third user equipment, and
said utility function for said stream to be transferred to said second user equipment indicates the user perceived quality based on the selected resolution and based on the selected codec, and/or said utility functions for said streams received by said third user equipments indicate the user perceived quality based on the selected codec:

wherein said optimization optimizes said combined quality measure based on said utility functions, said available second resolutions, and said available codecs in addition or alternatively to said data rates, to determine the second resolution and the codec for which the combined quality measure reaches an optimum.

15. A computer program comprising computer program code which when being executed on a computer enables said computer to carry out a method according to one of claims 1 to 10.

**Amended claims in accordance with Rule 137(2) EPC.**

1. A method for transferring a video stream having a first resolution from a first user equipment to a second user equipment having a larger screen and being capable of offering a plurality of second resolutions which are higher than said first resolution, wherein one or more third user equipments are also receiving video streams through the same network entity which has a limited bandwidth capacity, said method comprising:

Performing an optimization operation to determine the second resolution to be selected among said plurality of second resolutions at said target user equipment for the video stream to be transferred,
wherein said optimization operation comprises:

Using utility functions as an input to said optimizing operation, said utility functions having been determined in advance and respectively indicating for each video stream the quality perceived by a user depending on the resolution of the video stream and the allocated data rate, wherein

said optimizing operation calculates a combined quality measure based on the utility functions for said video streams, said combined quality measure being calculated such as to find among the plurality of possible resolutions and data rates which could be assigned to said second user equipment, and among the plurality of possible data rates which could be assigned to the video streams received by said third user equipments after the transfer of said video stream, the resolution and data rates to be assigned to the second and third user equipments after the transfer for which the combined quality measure reaches its optimum or extremum; and

selecting the second resolution and the data rates for the streams received by said second and third user equipments after said transfer of said video stream in accordance with the result of the optimization procedure such that the combined quality measure reaches its extremum.

**2.** The method of claim 1, wherein

there is provided one utility function for each application or video stream, said utility function indicating for its corresponding application or video stream how the user perceived quality depends on the resolution and the data rate and/or the codec being used;

wherein said combined quality measure is calculated based on the individual quality measures of the first, second and third user equipments and their corresponding video streams as indicated by the utility functions of the video streams;

wherein said optimization comprises to look for a resource allocation which involves the allocation of one of said plurality of second resolutions to said second user equipment and respective data rates to each of said second and third user equipments to be used at said second and third user equipments after the transfer of said video stream.

**3.** The method of claim 1 or 2, wherein said optimum or extremum combined quality measure comprises one or more of the following:

The maximization of the average quality for said second and third user equipments;

the maximization of the total sum of all quality levels of the second and third user equipments;

the maximization of the average overall quality for said second and third user equipments while ensuring a minimum quality level for said transferred video stream;

the minimization of the quality differences between all the second and third user equipments after the transfer.

**1.** The method of one of the preceding claims, wherein in addition to said plurality of resolutions offered at said second user equipment there are also a plurality of codecs at said second user equipment and/or at said third user equipment, and

said utility function for said stream to be transferred to said second user equipment indicates the user perceived quality based on the selected resolution and based on the selected codec, and/or said utility functions for said streams received by said third user equipments indicate the user perceived quality based on the selected codec;

wherein said optimization optimizes said combined quality measure based on said utility functions, said available second resolutions, and said available codecs in addition or alternatively to said data rates, to determine the second resolution and the codec for which the combined quality measure reaches an optimum.

**5.** The method of one of the preceding claims, wherein

when calculating said combined quality measure, different priorities are assigned to correspondingly different resolutions by applying a weighting function to the video utility function which indicates the user perceived quality level at said second user equipment such that for a higher resolution the corresponding user perceived quality level has assigned a higher weight.

**6.** The method of claim 5, wherein said weighting function comprises a weighting factor which is larger for larger resolutions and which is applied to the user perceived quality as derived from the utility function for the video stream to be transferred to the second user equipment.

**7.** The method of one of claims 5 to 6, wherein said weighting function comprises a weighting factor being applied to the user perceived quality level as indicated by said utility function, and/or

wherein the weighting factor raises steeper at smaller resolutions and raises less steep at larger resolutions

**8.** The method of claim 5 to 7, wherein said weighting factor is based on one or more of the following:

The user perceived quality gain which is achieved when changing from a lower resolution to a higher resolution; a cost function which indicates a cost parameter indicating costs in network resources which are necessary for keeping the user perceived quality level the same when changing from a first resolution to a second resolution.

**9.** The method of one of claims 5 or 8, wherein
said user perceived quality gain is experimentally determined by asking a set of users about their perceived quality gain for a certain change in resolution to thereby obtain a function which indicates the gain in quality gain when changing the resolution from an initial resolution to a higher resolution, and/or
said cost function is defined by the network operator to define the cost parameter as a function of the additional bandwidth which is necessary to change an initial resolution to a second higher resolution.

**10.** The method of one of claims 5 to 9, wherein
said combined parameter is, for a certain second resolution and its required additional bandwidth, obtained as a combination of the user obtained quality gain and the cost function for said quality gain and said second resolution.

**11.** An apparatus for transferring a video stream having a first resolution from a first user equipment to a second user equipment having a larger screen and being capable of offering a plurality of second resolutions which are higher than said first resolution, wherein one or more third user equipments are also receiving video streams through the same network entity which has a limited bandwidth capacity, said apparatus comprising:

a module for performing an optimization operation to determine the second resolution to be selected among said plurality of second resolutions at said target user equipment for the video stream to be transferred, wherein said optimization operation comprises:
using utility functions as an input to said optimizing operation, said utility functions having been determined in advance and respectively indicating for each video stream the quality perceived by a user depending on the resolution of the video stream and the allocated data rate, wherein
said optimizing operation calculates a combined quality measure based on the utility functions for said video streams, said combined quality measure being calculated such as to find among the plurality of possible resolutions and data rates which could be assigned to said second user equipment, and among the plurality of possible data rates which could be assigned to the video streams received by said third user equipments after the transfer of said video stream, the resolution and data rates to be assigned to the second and third user equipments after the transfer for which the combined quality measure reaches its optimum or extremum; and
a module for selecting the second resolution and the data rates for the streams received by said second and third user equipments after said transfer of said video stream in accordance with the result of the optimization procedure such that the combined quality measure reaches its extremum.

**12.** The apparatus of claim 11, wherein
there is provided one utility function for each application or video stream, said utility function indicating for its corresponding application or video stream how the user perceived quality depends on the resolution and the data rate and/or the codec being used;
wherein said combined quality measure is calculated based on the individual quality measures of the first, second and third user equipments and their corresponding video streams as indicated by the utility functions of the video streams;
wherein said optimization comprises to look for a resource allocation which involves the allocation of one of said plurality of second resolutions to said second user equipment and respective data rates to each of said second and third user equipments to be used at said second and third user equipments after the transfer of said video stream

**13.** The apparatus of claim 11 or 12, wherein said optimum or extremum combined quality measure comprises one or more of the following:

The maximization of the average quality for said second and third user equipments;
the maximization of the total sum of all quality levels of the second and third user equipments;
the maximization of the average overall quality for said second and third user equipments while ensuring a minimum quality level for said transferred video stream;
the minimization of the quality differences between all the second and third user equipments after the transfer.

**14.** The apparatus of one of claims 11 to 13, wherein in addition to said plurality of resolutions offered at said second user equipment there are also a plurality of codecs at said second user equipment and/or at said third user equipment, and

said utility function for said stream to be transferred to said second user equipment indicates the user perceived quality based on the selected resolution and based on the selected codec, and/or said utility functions for said streams received by said third user equipments indicate the user perceived quality based on the selected codec; wherein said optimization optimizes said combined quality measure based on said utility functions, said available second resolutions, and said available codecs in addition or alternatively to said data rates, to determine the second resolution and the codec for which the combined quality measure reaches an optimum.

**15.** A computer program comprising computer program code which when being executed on a computer enables said computer to carry out a method according to one of claims 1 to 10.

Fig. 1

Fig. 2

Originatin g UE → IUT AS → QoE module → Targe UE

1. IUT request to targe UE

2. Check for target UE capabilities (e.g. Resolution, codec)

3. Send a request for checking the requested IUT (with target UE capabilites info.)

4. Perform QoE-based optimization for IUT service (see QoE module flow chart )

5. Send a selected resolution/codec info

6. Perform an IUT operation

7. Agree on an IUT operation

8. Notification of the result of The requested IUT operation

Fig. 3

EP 2 429 190 A1

18

| | UE1.1 | UE1.2 | UE2 | UE3 |
|---|---|---|---|---|
| Utility Function (UF) | (VGA) | (VGA XGA WXGA HD) | (VGA) | (VGA) |
| Quality level (before IUT) | 4 | N/A (not in use yet) | 4.1 | 3.8 |
| Input for QoE optimization (in addition to info. from eNodeB) | Not used in optimization | $UF_{UE1.2}$ (for all possible resolutions) | $UF_{UE2}$ | $UF_{UE3}$ |
| Objective function | $\arg\max\left(MOS_{UE1.2}(\tilde{x}_{XGA}, \tilde{x}_{WXGA}, \tilde{x}_{HD}) + MOS_{UE2}(\tilde{x}_{VGA}) + MOS_{UE3}(\tilde{x}_{VGA})\right)$ $\tilde{x}$ is a set of all possible resource allocation | | | |
| Quality level (after IUT) | N/A (not used anymore after IUT) | 3.3 (with XGA) | 3.7 | 3.5 |

Fig. 4

EP 2 429 190 A1

| | | | | |
|---|---|---|---|---|
| **Utility Function (UF)** | <graph: MOS vs Data Rate (kbps), VGA> | <graph: MOS vs Data Rate (kbps), VGA, XGA, WXGA, HD; plus Weighting factor (α) vs resolution> | <graph: MOS vs Data Rate (kbps), VGA> | <graph: MOS vs Data Rate (kbps), VGA> |
| **Quality level (before IUT)** | 4 | N/A (not in use yet) | 4.1 | 3.8 |
| **Input for QoE optimization (in addition to info. from eNodeB)** | Not used in optimization | $UF_{UE1.2}$ (for all possible resolutions) | $UF_{UE2}$ | $UF_{UE3}$ |

**Objective function**

$$\arg\max\left(\left(\alpha_{UE1.2}\cdot MOS_{UE1.2}(\tilde{x}_{XGA},\tilde{x}_{WXGA},\tilde{x}_{HD})\right)+MOS_{UE2}(\tilde{x}_{VGA})+MOS_{UE3}(\tilde{x}_{VGA})\right)$$

$\tilde{x}$ is a set of all possible resource allocation

| | | | | |
|---|---|---|---|---|
| **Quality level (after IUT)** | N/A (not used anymore after IUT) | 3.3 (with WXGA) | 3.4 | 3.2 |

**Fig. 5**

**UE1.1**

**UE1.2**

MOS VGA Step 1

4.5
4

Utility Function
(UF)

1

0    500

Data
Rate
(kbps)

MOS VGA XGA WXGA HD Step 3

4.5
4=MOS4

1

0    500    1000    1500

Data
Rate
(kbps)

$R_{VGA, MOS4}$  $R_{XGA, MOS4}$  $R_{WXGA, MOS4}$  $R_{HD, MOS4}$

Quality level
(before IUT)

$MOS_{UE1, CUR} = 4$

Not in used yet

User satisfaction
for IUT
(quality gain) $\Theta$

Step 2

1

0

From VGA to other resolutions

0    XGA    WXGA    HD

Resolution

Network
cost $\Psi$

Step 4

1

0

From VGA to other resolutions

0    500    1000    1500

Additional
data rate
required $\Omega$

$$\Omega = R_{XXX, MOS4} - R_{VGA, MOS4}$$

Step 5

$$\alpha = (a \cdot \Theta) + (b \cdot (1 - \Psi))$$

where

$a$ and $b$ are priority given by the network operator

**Fig. 6**

Europäisches
Patentamt
European
Patent Office
Office européen
des brevets

**EUROPEAN SEARCH REPORT**

Application Number

EP 10 17 6432

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Jong-Choul Yim, San-Ki Kim, Byung-Sun Lee: "MSF Whitepaper on Service Continuity (IUT)", MultiService Forum Technical Reports , 1 February 2010 (2010-02-01), pages 1-21, XP002638797, Retrieved from the Internet: URL:http://www.msforum.org/techinfo/reports/MSF-TR-SERVICES-003-FINAL.pdf [retrieved on 2011-05-25] * page 9, paragraph 4 - page 12, paragraph 5; figures 3-7 * ----- | 1-15 | INV. H04N7/24 |
| Y | "3rd Generation Partnership Project; Technical Specification Group Services and System Aspects; IP Multimedia Subsystem (IMS) service continuity enhancements; Service, policy and interaction; Stage 2 (Release 9)", 3GPP STANDARD; 3GPP TR 23.838, 3RD GENERATION PARTNERSHIP PROJECT (3GPP),, no. V9.0.0, 1 June 2009 (2009-06-01), pages 1-51, XP050363948, * page 11, paragraph 4.2.1 - page 13, paragraph 4.2.4 * * page 23, paragraph 4.6.1 - page 26, paragraph 4.7.2 * ----- -/-- | 1-15 | TECHNICAL FIELDS SEARCHED (IPC) H04N H04L |

The present search report has been drawn up for all claims

| Place of search | Date of completion of the search | Examiner |
|---|---|---|
| Munich | 30 May 2011 | Moschetti, Fulvio |

Europäisches
Patentamt

European
Patent Office

Office européen
des brevets

# EUROPEAN SEARCH REPORT

Application Number

EP 10 17 6432

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | SRISAKUL THAKOLSRI, SHOAIB KHAN, ECKEHARD STEINBACH, WOLFGANG KELLERER: "QoE-Driven Cross-Layer Optimization for High Speed Downlink Packet Access", JOURNAL OF COMMUNICATIONS, 1 October 2009 (2009-10-01), pages 669-680, XP002638796, DOI: 10.4304/jcm.4.9.669-680 Retrieved from the Internet: URL:http://ojs.academypublisher.com/index.php/jcm/article/download/0409669680/917 [retrieved on 2011-05-25] * page 669, paragraph I - page 670, column 1, line 25 * * page 670, paragraph II.A; figures 1,3 * * page 672, paragraph II.C - page 673, paragraph II.C.3 * * page 674, paragraph III.A - paragraph III.B * ----- | 1-15 | |
| Y | EP 1 463 323 A1 (BROADCOM CORP [US]) 29 September 2004 (2004-09-29) * paragraph [0060] - paragraph [0070] * * paragraph [0006] * ----- | 1-15 | TECHNICAL FIELDS SEARCHED (IPC) |
| Y | WO 2010/081146 A2 (STARENT NETWORKS CORP [US]; GHAI RAJAT [US]; ANPAT SOURABH [GB]) 15 July 2010 (2010-07-15) * paragraph [0009] - paragraph [0010]; figures 5,6 * * paragraph [0024] - paragraph [0027] * * paragraph [0033] - paragraph [0036] * ----- | 1-15 | |

The present search report has been drawn up for all claims

| Place of search | Date of completion of the search | Examiner |
|---|---|---|
| Munich | 30 May 2011 | Moschetti, Fulvio |

EPO FORM 1503 03.82 (P04C01)

**EP 2 429 190 A1**

**ANNEX TO THE EUROPEAN SEARCH REPORT
ON EUROPEAN PATENT APPLICATION NO.**

EP 10 17 6432

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2011

| Patent document cited in search report | | Publication date | Patent family member(s) | | Publication date |
|---|---|---|---|---|---|
| EP 1463323 | A1 | 29-09-2004 | NONE | | |
| WO 2010081146 | A2 | 15-07-2010 | US 2010279670 | A1 | 04-11-2010 |

EPO FORM P0459

For more details about this annex : see Official Journal of the European Patent Office, No. 12/82

## REFERENCES CITED IN THE DESCRIPTION

**Non-patent literature cited in the description**

- **R. SHACHAM ; H. SCHULZRINNE ; S. THA-KOLSRI ; W. KELLERER.** Session Initiation Protocol (SIP) Session Mobility. *RFC 5631,* October 2009
- IP Multimedia Subsystem (IMS) service continuity (Stage 2) Release 10. *3GPP: TS 23.237,* December 2009
- IP Multimedia Subsystem (IMS) (Stage 2) Release 10. *3GPP: TS 23,228,* December 2009
- **S. KHAN ; S. DUHOVNIKOV ; E. STEINBACH ; W. KELLERER.** MOS-based multiuser multiapplication cross-layer optimization for mobile multimedia communication. *Advances in Multimedia,* 2007
- **S. THAKOLSRI ; S. KHAN ; E. STEINBACH ; W, KELLERER.** QoE-Driven Cross-Layer Optimization for High Speed Downlink Packet Access. *Journal of Communications, Special issue on Multimedia Communications, Networking and Applications,* October 2009, vol. 4 (9), 669-680
- **S. THAKOLSRI ; S. KHAN ; E. STEINBACH ; W. KELLERER.** *JCM,* 2009